# EUROPÄISCHE PATENTANMELDUNG

(11) **EP 3 936 262 A1**
(43) Veröffentlichungstag der Anmeldung: **12.01.2022**
(21) Anmeldenummer: 20185052.6
(22) Anmeldetag: 09.07.2020
(51) Int. Cl.: B22F 3/105, B33Y 10/00, B33Y 30/00, B33Y 50/02

(54) **VERFAHREN ZUR SCHICHTWEISEN FERTIGUNG EINES DREIDIMENSIONALEN OBJEKTS, MIT GEZIELTER BELEUCHTUNG VON KORNRÄNDERN**

(71) Anmelder: Ness, Stephanie, 1170 Wien (AT)
(72) Erfinder: Ness, Stephanie, 1170 Wien (AT)
(74) Vertreter: Kohler Schmid Möbus Patentanwälte

(57) **Zusammenfassung**

Die Erfindung betrifft ein Verfahren zum schichtweisen Fertigen eines dreidimensionalen Objekts (102), mit folgenden Schritten:
Schritt a) eine neue Schicht (105) von Körnern (201) eines metallischen Materials (109) wird auf einem Substrat (104) aufgetragen,
wobei die Körner (201) eine mittlere Teilchengröße d50=DM aufweisen und eine mittlere Schichtdicke SD der neu aufgetragenen Schicht (105) maximal 1,5*DM beträgt,
Schritt b) die Topographie des Substrats (104) wird vermessen, einschließlich der Position und Gestalt der einzelnen Körner (201) der neuen Schicht (105);
Schritt c) aus der in Schritt b) gemessenen Topographie und der gewünschten Gestalt des dreidimensionalen Objekts (102) wird ein Beleuchtungsplan für die neue Schicht (105) bestimmt;
Schritt d) gemäß dem Beleuchtungsplan wird zumindest ein Teil der neuen Schicht (105) von Körnern (201) mit einem Elektronenstrahl (115) lokal beleuchtet,
wobei der Elektronenstrahl (115) einen Strahldurchmesser ED auf der Oberfläche des Substrats (104) mit ED≤0,3*DM aufweist,
wobei mit dem Elektronenstrahl (115) an einem jeweiligen Korn (201) gezielt ein oder mehrere Teile (202) eines Randes (401) des Korns (201) beleuchtet werden, wodurch das Korn (201) auf dem Substrat (104) fixiert wird,
und wobei das jeweilige beleuchtete Korn (201) bei einer Temperatur unterhalb des Schmelzpunkts des metallischen Materials (109) bleibt;
wobei die vorhergehenden Schritte a) bis d) mehrfach wiederholt werden, bis das dreidimensionale Objekt (102) vollständig ist. Mit dem erfindungsgemäßen Verfahren ist eine verbesserte Fertigungsgenauigkeit erreichbar.

## Beschreibung

Die Erfindung betrifft ein Verfahren zum schichtweisen Fertigen eines dreidimensionalen Objekts.

Bei der schichtweisen Fertigung, auch genannt additive Fertigung oder 3D-Druck, wird Material Schicht für Schicht aufgetragen, um so ein dreidimensionales Objekt zu erzeugen.

Für die Fertigung von metallischen Körpern ist es bekannt, eine Schicht von Metallpulver auf ein Substrat aufzutragen und mit einem Laserstrahl oder Elektronenstrahl lokal zu bestrahlen. Dabei werden die Pulverpartikel (Körner), die sich unter dem Laserstrahl oder Elektronenstrahl befinden, aufgeschmolzen, und das Metallpulver wird dadurch lokal verfestigt. Danach wird die nächste Schicht des Metallpulvers aufgetragen und lokal aufgeschmolzen, und so fort.

Mit diesem Vorgehen kann ein dreidimensionaler Körper schnell und praktisch ohne Vorbereitung gefertigt werden, insbesondere ohne dass besondere Werkzeuge (etwa eine Gussform) angefertigt werden müssten. Allerdings ist die Fertigungsgenauigkeit bei diesem Vorgehen begrenzt.

Im Jahr 2016 erhielten David J. Thouless, F. Duncan M. Haldane und J. Micheal Kosterlitz den Nobelpreis für Physik für theoretische Entdeckungen topologischer Phasenübergänge und topologischer Materiephasen.

In Ludvig de Knoop et al., "Electric field-controlled reversible order-disorder switching of a metal tip surface", https://researchgate.net/publication/325008959, 22. Mai 2018, wird ein Phasenübergang an Goldoberflächen beschrieben, der durch ein starkes elektrisches Feld bei Raumtemperatur erzeugt wurde.

### Aufgabe der Erfindung

Es ist Aufgabe der Erfindung, ein Verfahren zur schichtweisen Fertigung dreidimensionaler Objekte vorzustellen, mit dem eine verbesserte Fertigungsgenauigkeit erreichbar ist.

### Beschreibung der Erfindung

Diese Aufgabe wird erfindungsgemäß gelöst durch ein Verfahren zum schichtweisen Fertigen eines dreidimensionalen Objekts,
mit folgenden Schritten:
Schritt a) eine neue Schicht von Körnern eines metallischen Materials wird auf einem Substrat aufgetragen,
   wobei die Körner eine mittlere Teilchengröße d50=DM aufweisen und eine mittlere Schichtdicke SD der neu aufgetragenen Schicht maximal 1,5^{∗}DM beträgt, insbesondere wobei die neue Schicht von Körnern auf eine zuvor gefertigte Schicht von Körnern des Substrats aufgetragen wird;
Schritt b) die Topographie des Substrats wird vermessen, einschließlich der Position und Gestalt der einzelnen Körner der neuen Schicht;
Schritt c) aus der in Schritt b) gemessenen Topographie und der gewünschten Gestalt des dreidimensionalen Objekts wird ein Beleuchtungsplan für die neue Schicht bestimmt;
Schritt d) gemäß dem Beleuchtungsplan wird zumindest ein Teil der neuen Schicht von Körnern mit einem Elektronenstrahl lokal beleuchtet,
   wobei der Elektronenstrahl einen Strahldurchmesser ED auf der Oberfläche des Substrats mit ED≤0,3^{∗}DM aufweist,
   wobei mit dem Elektronenstrahl an einem jeweiligen Korn gezielt ein oder mehrere Teile eines Randes des Korns beleuchtet werden, wodurch das Korn auf dem Substrat fixiert wird, insbesondere an Körnern einer zuvor gefertigten Schicht und/oder an anderen Körnern der neuen Schicht,
   und wobei das jeweilige beleuchtete Korn bei einer Temperatur unterhalb des Schmelzpunkts des metallischen Materials bleibt;
   wobei die vorhergehenden Schritte a) bis d) mehrfach wiederholt werden, bis das dreidimensionale Objekt vollständig ist.

Die vorliegende Erfindung schlägt vor, bei einem 3D-Druckverfahren mit einem Elektronenstrahl die Körner (Pulverpartikel) einer neu aufgetragenen Schicht eines metallischen Materials (Pulvers) unter Berücksichtigung der Topographie der Körner der neuen Schicht und der Topographie des darunterliegenden Substrats (meist eine zuvor gefertigte Schicht des metallischen Materials) gezielt zu bestrahlen. Der Elektronenstrahl wird auf Teile (auch genannt Teilstücke) an den Rändern der Körner gerichtet, um an diesen Rändern auf die Körner einzuwirken, und dadurch oberflächennahe Effekte an den Körnern zu induzieren, insbesondere so genannte niederdimensionale Energieübertragung (low dimensional power transmission) oder niederdimensionale Phasenübergänge (low dimensional phase transitions). Der Elektronenstrahl entfaltet dabei eine Wirkung entsprechend einem starken, lokalen elektrischen Feld. Gemäß der vorliegenden Erfindung ist es dadurch möglich, bei einer Temperatur deutlich unterhalb des Schmelzpunkts des metallischen Materials eine lokal begrenzte Umverteilung von Material auszulösen, wodurch die Körner der neuen Schicht mit dem Substrat (etwa mit Körnern oder allgemeiner der Oberfläche einer zuvor gefertigten Schicht) verbunden werden können, so dass insgesamt schichtweise ein festes, dreidimensionales Objekt erzeugt werden kann. Mittels des Elektronenstrahls wird also die Topographie der neuen Schicht der Körner durch Erzeugung lokaler Festkörperbrücken verändert.

Im Rahmen der Erfindung bleibt das metallische Material auch unter der Bestrahlung durch den Elektronenstrahl unterhalb seiner Schmelztemperatur. Es kommt also nicht zu einem allgemeinen Aufschmelzen des metallischen Materials. Entsprechend sind Bewegungen von (ganzen) Körnern in der neuen (obersten) Schicht minimiert bzw. praktisch nicht vorhanden, was die Fertigungsgenauigkeit des erfindungsgemäßen Verfahrens enorm steigern kann. Die Fertigungsgenauigkeit des erfindungsgemäßen Verfahrens wird im Wesentlichen durch die Größe der eingesetzten Körner des metallischen Materials bestimmt; durch Einsatz entsprechend feiner Pulver können dann Fertigungsgenauigkeiten in der Größenordnung einiger µm oder noch feiner grundsätzlich erreicht werden.

Um gezielt die Ränder der Körner mit dem Elektronenstrahl aufsuchen zu können, wird im Rahmen der Erfindung eine zunächst lose aufliegende, neue Schicht von Körnern vor Bestrahlungsbeginn zunächst vermessen. Sodann wird ein Beleuchtungsplan (oder Bearbeitungsplan) erstellt, also der Weg des Elektronenstrahls auf der neuen Schicht, einschließlich der lokalen Einwirkzeiten und/oder Vorschubgeschwindigkeiten geplant (berechnet). Hierbei werden in Zonen, in denen die Körner fixiert werden sollen, zumindest an einem Teilstück, meist (und bevorzugt) an mehreren Teilstücken seines Randes bestrahlt, um an den bestrahlten Teilstücken eine Verbindung (Befestigung) zum Substrat oder anderen Körnern der neuen Schicht einzurichten. In Zonen des Substrats, in denen die Körner nicht fixiert werden sollen, erfolgt keine Bestrahlung. Die Aufteilung der Zonen, wo Körner fixiert werden sollen, und der Zonen, wo Körner nicht fixiert werden sollen, ergibt sich aus dem Bauplan des zu fertigenden dreidimensionalen Objekts. Sodann wird der Elektronenstrahl auf die neue Schicht gerichtet und entsprechend dem Beleuchtungsplan über die neue Schicht des Substrats geführt. Entsprechend können alle benötigten Schichten des dreidimensionalen Objekts gefertigt werden.

Man beachte, dass im Rahmen der Erfindung bei der Abarbeitung (Fertigung) einer Schicht des pulverförmigen Material eine Vielzahl von Körnern, oft hunderte Körner, gezielt aufgesucht und abgearbeitet werden muss, wobei die Materialumverteilung bzw. Verfestigung meist langsamer ist als bei herkömmlichen Verfahren, die das pulverförmige Material aufschmelzen würden. Die Abarbeitung einer Schicht im Rahmen der Erfindung dauert daher oft deutlich länger als bei herkömmlichen Verfahren, kann aber eine höhere Fertigungsgenauigkeit erreichen.

Im Rahmen der Erfindung werden Körner grundsätzlich nicht insgesamt bestrahlt, sondern jeweils nur zu einem kleinen Teil (in der Regel meist deutlich weniger als auf 20%, oft deutlich weniger als 10%, ihrer auf das Substrat projizierten Fläche). Der Elektronenstrahl wird in der Regel auf einen (in einer Projektion des Korns auf eine Ebene senkrecht des Elektronenstrahls) außen liegenden Teil des Korns gerichtet. Typischerweise wird bei einem jeweiligen Korn der Rand (Umfang) des Korns nicht vollständig mit dem Elektronenstrahl abgefahren, da das Abfahren von ein oder mehreren Teilen (Teilstücken) des Randes für eine Fixierung des Korns ausreicht; es ist aber im Rahmen der Erfindung auch möglich, den Rand eines jeweiligen Korns vollständig mit dem Elektronenstrahl abzufahren (die abgefahrenen/beleuchteten Teile des Randes ergänzen sich dann zum vollumfänglichen Rand des Korns). Im einfachsten Fall ist der Elektronenstrahl in einem festen, meist senkrechten Winkel zum Substrat ausgerichtet; es ist aber grundsätzlich auch möglich, den Elektronenstrahl während der Fertigung einer neuen Schicht zu verschwenken. In der Regel trifft der Elektronenstrahl gleichzeitig teilweise auf ein Korn der neuen Schicht und teilweise auf ein Korn einer zuvor gefertigten Schicht oder ein weiteres Korn der neuen Schicht, insbesondere in einem Berührungsbereich der beteiligten Körner.

Im Rahmen der Erfindung wird die pro Schicht gefertigte Schichtdicke relativ zur (mittleren) Korngröße relativ gering gewählt, um eine ausreichende Befestigung der neu hinzugekommen Körner auf dem bisherigen Substrat vornehmen zu können. Bevorzugt gilt SD ≤ 1^{∗}DM bzw. dass maximal eine Lage von Körnern in einer jeweiligen neuen Schicht aufgetragen wird.

Der Elektronenstrahl ist klein im Vergleich zur (mittleren) Korngröße, meist mit ED≤0,2^{∗}DM. Der Strahldurchmesser (Strahlbreite) ED des Elektronenstrahls kann über FWHM (full width at half maximum) bestimmt werden; typischerweise gilt auch ED≥0,05^{∗}DM. Meist ist 200 nm ≤ ED ≤ 2 µm. Die (mittlere) Teilchengröße DM kann als volumenäquivalenter Kugeldurchmesser bestimmt werden. Typischerweise gilt 1 µm ≤ DM ≤ 10 µm. Oft sind die im Rahmen der Erfindung gefertigten Objekte relativ klein, beispielsweise mit einer maximalen Kantenlänge von 5 mm oder weniger, oft 3 mm oder weniger.

Die Erfindung kann insbesondere zur Fertigung von Schmuckteilen, insbesondere Verschlüssen für Schmuckteile, eingesetzt werden. Weiterhin kann die Erfindung beispielsweise in der Halbleiterindustrie, insbesondere für die Fertigung von integrierten Schaltkreisen oder Chips, eingesetzt werden.

### Bevorzugte Varianten der Erfindung

Eine vorteilhafte Variante des erfindungsgemäßen Verfahrens sieht vor, dass weiterhin in einem Schritt e) die Topographie des Substrats einschließlich einer erzeugten Anbindung der Körner der neuen Schicht zum übrigen Substrat gemessen wird, wobei auch Schritt e) mehrfach wiederholt wird, bis das dreidimensionale Objekt vollständig ist,
und dass jeweils in Schritt c) bei der Erstellung des Beleuchtungsplans der neuen Schicht die gemessenen Topographien der Schritte b) und e) sowie der im Schritt c) angewandte Beleuchtungsplan von einer oder mehreren, zuvor gefertigten Schichten berücksichtigt wird. Mit anderen Worten, nach Fertigstellung (Fertigung) einer jeweiligen Schicht des pulverförmigen Materials wird der Erfolg der früher versuchten Körnerbefestigung überprüft. Dadurch ist es möglich, durch (maschinelles) Lernen den in Schritt c) erstellten Beleuchtungsplan von Schicht zu Schicht zu verbessern. Dies ist dann besonders von Vorteil, wenn eine bislang unbekannte Fertigungssaufgabe (beispielsweise mit einem neuen metallischen Material) angegangen wird, und noch nicht bekannt ist, mit welchen Fertigungsparametern diese Fertigungsaufgabe optimal gelöst werden kann (beispielsweise in Hinblick auf eine besonders starke Befestigung der Körner, oder eine schnelle Gesamtbearbeitungszeit). Die Anbindung der Körner kann beispielsweise über die beobachtete Breite von die Körner verbindenden Hälsen oder den kleinsten lokalen Krümmungsradius jeweils an einem verbindenden Hals bestimmt werden.

Besonders bevorzugt ist eine Weiterentwicklung dieser Variante, bei der in Schritt c) ein oder mehrere Parameter des Beleuchtungsplans von Schicht zu Schicht gemäß einem genetischen Algorithmus optimiert werden. Genetische Algorithmen können für die Bestimmung optimaler Parameter gut eingesetzt werden, da sie im Rahmen der Erfindung vergleichsweise schnell und zuverlässig konvergieren. Typische Parameter des Beleuchtungsplans sind die Elektronenstrahlleistung, der Elektronenstrahldurchmesser (an der Substratoberfläche), die Verweildauer des Elektronenstrahls an einem Ort oder eine Vorschubgeschwindigkeit des Elektronenstrahls, oder auch die Beschleunigungsspannung des Elektronenstrahls. Die Optimierung erfolgt typischerweise in Hinblick auf die erzeugte Anbindung (Befestigungserfolg) der Körner der neuen Schicht, ggf. auch in Hinblick auf andere gewünschte Eigenschaften, etwa der Dichte des erzeugten dreidimensionalen Objekts.

Besonders bevorzug ist eine Variante, bei der in Schritt d) durch den Elektronenstrahl am jeweiligen Korn im Bereich des beleuchteten Teils des Randes lokal ein Phasenübergang des metallischen Materials bewirkt wird. Durch den Phasenübergang ist es möglich, die Materialumverteilung zur Verbindung von Körnern mit dem Substrat bzw. anderen Körnern zu beschleunigen oder (bei der angewandten Temperatur) praktisch zu ermöglichen. Typischerweise ist die durch den Elektronenstrahl induzierte Phase von niedrigerer Ordnung als die ohne Einwirkung des Elektronenstrahls bestehende Phase; insbesondere kann die vom elektronenstrahl induzierte Phase eine Phase ohne Fernordnung der Atome der Phase sein. Durch den Elektronenstrahl kann, entsprechend der Wirkung eines starken elektrischen Feldes, die Energie zur Bildung von Strukturdefekten herabgesetzt werden, wodurch diese leichter und mit großer Häufigkeit (Dichte) entstehen, was schließlich zum Phasenübergang führt. Typischerweise begrenzt sich der Phasenübergang unmittelbar auf das von Elektronenstrahl bestrahlte Gebiet, und ist oft auf eine dünne, oberflächennahe Materialschicht begrenzt, meist auf nur einige Nanometer oder wenige zehn Nanometer Eindringtiefe.

Bevorzugt ist eine Weiterentwicklung hierzu, wobei der Phasenübergang des metallischen Materials ein niederdimensionaler Phasenübergang ist, insbesondere ein Phasenübergang gemäß einer "Kosterlitz-Thouless transition". Ein niederdimensionaler Phasenübergang kann, unter Nutzung der Wirkung des Elektronenstrahls, in einem oberflächennahen Bereich des jeweiligen Korns ausgelöst werden, und kann dabei bei niedrigen Temperaturen, ggf. bei Raumtemperatur, stattfinden. Im Rahmen einer "Kosterlitz-Thouless transition" (Kosterlitz-Thouless-Übergang) erfolgt ein Phasenübergang in niedrigen Dimensionen (1D oder hier 2D) aufgrund der Proliferation von topologischen Defekten in den Ordnungsparametern (Entbindung von Wirbel-Antiwirbel-Paaren / unbinding of vortex-antivortex pairs).

Bevorzugt ist ein Variante, bei der das metallische Material ein Edelmetall oder eine Edelmetalllegierung ist. Diese Materialien lassen sich besonders gut verarbeiten.

Vorteilhaft ist zudem eine Variante, bei der das metallische Material Gold oder eine Goldlegierung ist. Gold lässt sich sehr gut verarbeiten; zudem ist das Auftreten von niederdimensionalen Phasenübergängen für dieses Material bereits gut erforscht und daher besonders leicht einzurichten.

Besonders bevorzugt ist eine Variante, bei der in Schritt b) und/oder in Schritt e) die Messung der Topographie des Substrats das Anfertigen eines oder mehrerer lichtoptischer Bilder des Substrats umfasst. Lichtoptische Bilder können mit einer optischen Kamera vergleichsweise kostengünstig erzeugt werden, und bei größeren (mittleren) Korndurchmessern (ca. 1,5 *µm oder größer) genügt das Auflösungsvermögen von lichtoptischen Kameras für die Erstellung des Beleuchtungsplans einschließlich der Erfassung der Topographie der Körner bzw. der Gestalt der Oberfläche des Substrats.

Vorteilhaft ist eine Variante, bei der in Schritt b) und/oder in Schritt e) die Messung der Topographie des Substrats das Anfertigen eines oder mehrerer Rasterelektronenmikroskop-Bilder des Substrats umfasst. Mit REM-Bildern lässt sich die Topographie der Körner bzw. die Gestalt der Oberfläche des Substrats mit besonders hoher Auflösung vermessen, insbesondere auch im nm-Bereich.

Bevorzugt ist auch eine Variante, bei der die Körner des metallischen Materials eine Teilchengrößenverteilung aufweisen
mit d10 ≥ 0,75^{∗}DM, bevorzugt d10 ≥ 0,90^{∗}DM,
und mit d90 ≤ 1,25^{∗}DM, bevorzugt d90 ≤ 1,10^{∗}DM. Mit einer solchen engen Korngrößenverteilung ist die Fixierung der Körner auf dem Substrat mit dem Elektronenstrahl im Rahmen der Erfindung vergleichsweise einfach und schnell möglich, zudem können die einzelnen Körner leichter mit einer Messvorrichtung erkannt werden.

Bevorzugt ist weiterhin eine Variante, die vorsieht,
dass 100 nm ≤ DM, bevorzugt 500 nm ≤ DM, besonders bevorzugt 1 µm ≤ DM, ganz besonders bevorzugt 1,5 µm ≤ DM,
und/oder dass DM ≤ 50 µm, bevorzugt DM ≤ 25 µm, besonders bevorzugt DM ≤ 10 µm, ganz besonders bevorzugt DM ≤ 5 µm. Diese (mittleren) Durchmesser der Körner des pulverförmigen Materials können im Rahmen der Erfindung gut gehandhabt werden, und zur Herstellung von dreidimensionalen Objekten mit hoher Genauigkeit eingesetzt werden. Bevorzugt liegt der (mittlere) Durchmesser DM der Körner bei ca. 1,5 µm bis 10 µm.

Bei einer vorteilhaften Variante ist vorgesehen, dass das Substrat beheizt wird, insbesondere wobei für eine Substrattemperatur Tsub in Kelvin und eine Schmelztemperatur Tmelt in Kelvin des metallischen Materials der Körner gilt: 0,50^{∗}Tmelt ≤ Tsub ≤ 0,90^{∗}Tmelt,
bevorzugt 0,55^{∗}Tmelt ≤ Tsub ≤ 0,75^{∗}Tmelt,
besonders bevorzugt 500°C ≤ Tsub ≤ 650°C. Durch Erwärmung des Substrats wird die Umverteilung des metallischen Materials beschleunigt; Phasenumwandlungen durch den Elektronenstrahl können leichter induziert werden. Typischerweise ist für die Beheizung an einer Substrathalterung eine elektrische Heizeinrichtung vorgesehen, oder das Substrat wird an seiner Oberfläche mit einer Infrarotlampe bestrahlt. Der Temperaturbereich 500°C ≤ Tsub ≤ 650°C, bevorzugt 550°C-600°C, ist für Gold als metallisches Material besonders gut geeignet. Tmelt wird ist hier ohne Einwirkung des Elektronenstrahls angenommen.

Vorteilhaft ist weiterhin eine Variante, die vorsieht, dass in Schritt d) der Elektronenstrahl, der den Teil oder die mehreren Teile des Randes des jeweiligen Korns beleuchtet, Berührungsbereiche des jeweiligen Korns zu Körnern einer zuvor gefertigten Schicht und/oder anderen Körnern der neuen Schicht beleuchtet, wobei die Berührungsbereiche zuvor in der in Schritt b) gemessenen Topographie gefunden wurden. Dadurch ist die Fixierung des jeweiligen Korns erleichtert und besonders schnell möglich.

In den Rahmen der vorliegenden Erfindung fällt auch eine Maschine zur schichtweisen Fertigung eines dreidimensionalen Objekts gemäß dem oben beschriebenen, erfindungsgemäßen Verfahren, umfassend
- eine Vakuumkammer;
- eine Substrathalterung für das Substrat;
- einen Pulverspeicher für die Körner des metallischen Materials;
- eine Verteileinrichtung zum Auftragen jeweils einer Schicht von Körnern des metallischen Materials auf das Substrat, insbesondere umfassend einen Schieber;
- eine Messvorrichtung zur Messung der Topographie des Substrats, insbesondere umfassend eine optische Kamera;
- eine elektronische Steuer- und Auswerteeinrichtung zur Bestimmung und Ansteuerung des Beleuchtungsplans;
- einen Nanomanipulator, umfassend wenigstens eine Elektronenkanone zur Erzeugung des Elektronenstrahls sowie eine Einrichtung zum relativen Bewegen des Elektronenstrahls zum Substrat. Mit dieser Maschine ist Herstellung des dreidimensionalen Objekts mit besonders hoher Fertigungsgenauigkeit möglich. Bevorzugt weist die Einrichtung zum relativen Bewegen des Elektronenstrahls zum Substrat eine relative Genauigkeit auf, die wenigstens so gut ist wie der Durchmesser ED des Elektronenstrahls. Bevorzugt ist weiterhin eine Heizeinrichtung für das Substrat auf der Substrathalterung vorgesehen. Man beachte, dass die elektronische Steuer- und Auswerteeinrichtung typischerweise an einem Computer eingerichtet ist, der separat von der übrigen Maschine angeordnet sein kann und Mess- und Steuerdaten mit der übrigen Maschine austauscht.

In einer bevorzugten Ausführungsform der erfindungsgemäßen Maschine umfasst die Einrichtung zum relativen Bewegen des Elektronenstrahls zum Substrat einen oder mehrere Schrittmotoren, mit denen die Substrathalterung und/oder die Elektronenkanone relativ zur übrigen Maschine bewegt werden kann. Mittels der Schrittmotoren kann der Nanomanipulator auf einfach zu programmierende Weise mit einer guten Einstellgenauigkeit verfahren werden. Bevorzugt erfolgt die Verstellung der Schrittmotoren entlang von wenigstens zwei, bevorzugt drei kartesischen Achsen; es kann aber auch eine Rotationsbewegung angesteuert werden, insbesondere beim Substrat gegenüber der übrigen Maschine. Man beachte, dass es im Rahmen der Erfindung auch möglich ist, den Elektronenstrahl durch elektrische und/oder magnetische Felder abzulenken.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt einen schematischen Querschnitt durch eine erste Ausführungsform einer erfindungsgemäßen Maschine;
- Fig. 2: zeigt eine schematische Explosionsdarstellung einer zweiten Ausführungsform einer erfindungsgemäßen Maschine;
- Fig. 3: illustriert schematisch den Ablauf der Fertigung einer neuen Schicht von Körnern des metallischen Materials im Rahmen einer beispielhaften Variante des erfindungsgemäßen Verfahrens;
- Fig. 4: zeigt beispielhaft schematisch die Beleuchtung eines Teils des Randes eines Korns, das ein anderes Korn berührt, mit dem Elektronenstrahl im Rahmen der Erfindung;
- Fig. 5: zeigt das Korn und das andere Korn von Fig. 4 nach der Einwirkung des Elektronenstrahls.

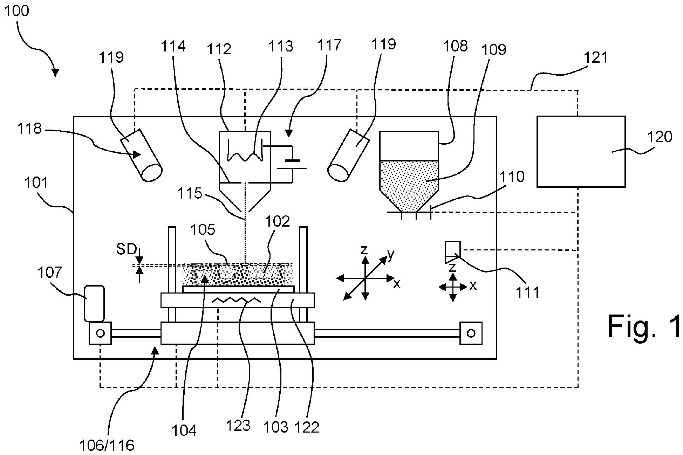

Die **Fig. 1** zeigt in einer schematischen Darstellung eine erste Ausführungsform einer erfindungsgemäßen Maschine 100.

Die Maschine 100 verfügt über eine durch luftdichte Gehäusewände begrenzte Vakuumkammer 101, in welcher ein dreidimensionales Objekt 102 schichtweise gefertigt werden kann. Das dreidimensionale Objekt 102 entsteht auf einer Substratplatte 103. Die Substratplatte 103 und der bereits darauf gefertigte Teil des dreidimensionalen Objekts 102 (soweit vorhanden) bilden ein Substrat 104, auf dem wiederholt eine neue (nächste) Schicht 105 des dreidimensionalen Objekts 102 gefertigt wird.

In der gezeigten Ausführungsform ist die Substratplatte 103 auf einem Kreuzschlittensystem 106 befestigt, mit dem das Substrat 104 in entlang drei kartesischen Richtungen x, y und z verfahren werden kann, also in Fig. 1 von links nach rechts (x), nach vorne und hinten (also aus der Zeichenebene heraus oder in die Zeichenebene hinein, y), und nach oben und unten (z). Dafür werden Schrittmotoren eingesetzt; beispielhaft ist der Schrittmotor 107 zur Betätigung der y-Achse eingezeichnet. In der gezeigten Ausführungsform ist die Substratplatte 103 auf dem in z-Richtung verfahrbaren Schlitten des Kreuzschlittensystems 106 angeordnet; dieser Schlitten bildet somit eine Substrathalterung 122 aus. In die Substrathalterung 122 ist hier eine elektrische Widerstandsheizung als eine Heizeinrichtung 123 für das Substrat 104 eingerichtet.

Die Vakuumkammer 101 enthält einen Pulverspeicher 108, der mit Körnern eines metallischen Materials 109, hier Goldpartikeln (Goldpulver) befüllt ist. Unterenends verfügt der Pulverspeicher 108 über einen automatisch betätigbaren Öffnungsmechanismus 110, um Körner des metallischen Materials 109 nach unten herausrieseln lassen zu können, insbesondere auf das Substrat 104, wenn dieses mittels des Kreuzschlittensystems 106 unter den Pulverspeicher 108 verfahren ist. Weiterhin ist eine Verteileinrichtung 111 vorgesehen, die hier mit einem Schieber ausgebildet ist, um die Körner des pulverförmigen Materials 109 auf der Oberfläche des Substrats 104 zu verstreichen und so eine gewünschte Schichtdicke SD einer neuen Schicht 105 des metallischen Materials 109 einstellen zu können. Der Schieber ist dazu in nicht näher dargestellter Weise motorisch in x und z verfahrbar. Überschüssiges (abgestrichenes) Pulver wird in nicht näher dargestellter Weise gesammelt, beispielsweise abgesaugt, und wiederverwendet.

Weiterhin ist in der Vakuumkammer 101 eine Elektronenkanone 112 angeordnet. Diese verfügt über ein Glühwendel 113 und eine Blende 114 mit einer Apertur (einem Loch). Zur Erzeugung eines Elektronenstrahls 115 wird der Glühwendel 113 mit elektrischem Strom beheizt; weiterhin wird die Blende 114 als Anode auf positive Spannung gegenüber dem Glühwendel 113 geschaltet, wodurch aus dem Glühwendel 113 ausgetretenen Elektronen auf die Blende 114 zu beschleunigt werden und hinter der Apertur der Blende 114 den Elektronenstrahl 115 bilden.

Der Elektronenstrahl 115 ist auf das Substrat 104 gerichtet, um dort den Rand der einzelnen Körner einer neuen Schicht zu bestrahlen und dadurch mit dem Substrat 104 zu verbinden. Durch das Kreuzschlittensystem 106 kann dabei das Substrat 104 relativ zur übrigen Maschine 100 und damit auch relativ zum Elektronenstrahl 115 bewegt werden; daher kann das Kreuzschlittensystem 106 hier als eine Einrichtung 116 zum relativen Bewegen des Elektronenstrahls 115 zum Substrat 104 aufgefasst werden. Die Elektronenkanone 112 und das die Einrichtung 116 (hier das Kreuzschlittensystem 106) bilden einen Nanomanipulator 117 der Maschine 100 für die Körner einer jeweils in Bearbeitung befindlichen neuen Schicht 105 aus.

In der Vakuumkammer 101 ist weiterhin eine Messvorrichtung 118 zur Messung der Topographie des Substrats 104, einschließlich der Körner einer etwaigen neuen Schicht 115, vorgesehen. Diese umfasst hier zwei lichtoptische Kameras 119, die aus unterschiedlichen Richtungen leicht schräg auf die (horizontale) Oberfläche des Substrats 104 gerichtet sind.

Die Messvorrichtung 118 ist über Datenleitungen 121 an eine elektronische Steuer- und Auswerteeinrichtung 120 der Maschine 100 angeschlossen, die außerhalb der Vakuumkammer 101 angeordnet ist. Die Steuer- und Auswerteinrichtung 120 kann besondere durch einen geeignet programmierten Personalcomputer ausgebildet sein. Die Steuer- und Auswerteeinrichtung 120 kann insbesondere aus den Bildern einer gerade aufgetragenen, neuen Schicht 105 von (noch losen) Körnern einen Beleuchtungsplan für diese Schicht 105 berechnen und anschließend umsetzen. Dazu steuert die Steuer- und Auswerteeinrichtung 120 den Nanomanipulator 117 (also die Elektronenkanone 112 und die Einrichtung 116 zum relativen Bewegen des Elektronenstrahls 115 zum Substrat 104) über Datenleitungen 121 in geeigneter Weise an. Zudem kann die Steuer- und Auswerteeinrichtung 120 über Datenleitungen 121 hier auch den Öffnungsmechanismus 110 und die Verteileinrichtung 111 ansteuern, wenn eine nächste Schicht 105 von metallischem Material 109 auf das Substrat 104 aufgetragen werden soll.

Während der Herstellung des dreidimensionalen Objekts 102 werden in einer jeweiligen Schicht in manchen Zonen die Körner aneinander befestigt (hier im Objekt 102 mit größeren Punkten dargestellt, und in manchen Zonen bleiben die Körner unverbunden (hier im Objekt 102 mit kleinen Punkten dargestellt). Nach Fertigstellung des dreidimensionalen Objekts 102 wird dieses aus der Vakuumkammer 101 durch einen nicht näher dargestellten Zugang herausgenommen, typischerweise mitsamt der Substratplatte 103, und eine neue (leere) Substratplatte wird auf der Substrathalterung 122 angeordnet, um die Fertigung eines nächsten Objekts vorzubereiten. Der Zugang kann über eine Schleuse verfügen, um bei einem Wechsel des Objekts 102 in der Vakuumkammer 101 das Vakuum nicht brechen zu müssen; dadurch ist die Vakuumkammer 101 nach dem Wechsel schneller wieder betriebsbereit. In der Vakuumkammer 101 ist mit einem nicht näher dargestellten Pumpsystem im Betrieb ein Hochvakuum eingerichtet (Druck 10⁻³ mbar oder niedriger, bevorzugt 10⁻⁵ mbar oder niedriger), so dass der Elektronenstrahl 115 problemlos propagieren kann, und die Elektronenkanone 112 mit geringem Verschleiß betrieben werden kann.

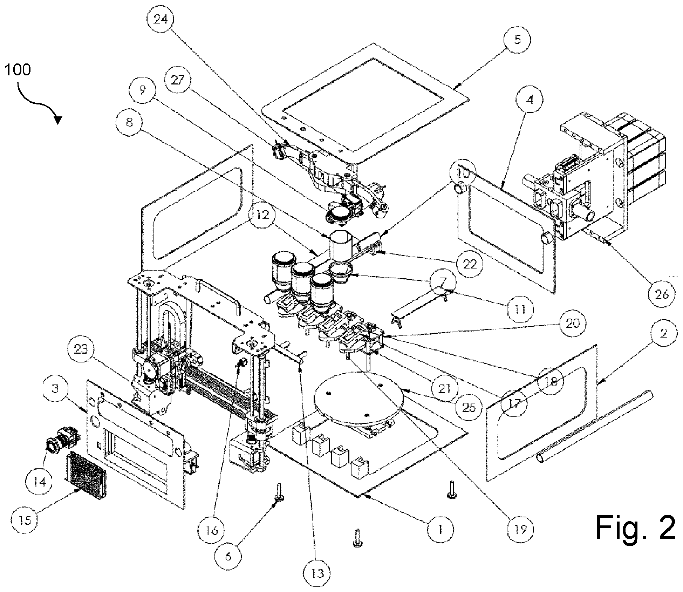

Die **Fig. 2** zeigt in einer schematischen Explosionsdarstellung eine zweite Ausführungsform einer erfindungsgemäßen Maschine 100.

Die Maschine 100 bildet mittels einer Bodenplatte 1, zwei Seitenplatten 2, einer Frontplatte 3, einer Rückplatte 4 sowie einer Deckelplatte 5 eine Vakuumkammer aus. Die Bodenplatte 1 steht auf Bodenstiften 7.

Es sind mehrere becherförmige Pulverspeicher vorgesehen, die mit pulverförmigem metallischem Material gefüllt werden können, wobei typischerweise in unterschiedlichen Pulverspeichern unterschiedliche Korngrößen oder chemisch unterschiedliche Materialien vorgesehen sind. Die Pulverspeicher verfügen hier jeweils über ein Becherunterteil 7, ein Bechermittelteil 8 und einen Becherdeckel 9. Pulver kann jeweils an einer Auslassbasis 17 über Auslasseinrichtungen 18, 19 nach unten abgelassen werden. Zudem sind an der Auslassbasis 17 Stifte 20, 21 vorgesehen.

In der Vakuumkammer ist ein Kreuzschlittensystem (auch Achssystem genannt) 23 vorgehen, mit dem die Pulverspeicher und auch eine Elektronenkanone (nicht näher dargestellt), angeordnet an einem Halter 27, in drei kartesische Richtungen x, y und z verfahren werden können. Dafür sind insbesondere Führungsstäbe 10 für die x-Achse und Halter 11, 12 für die y-Achse vorgesehen. Beispielhaft ist zudem der Schrittmotor 22 für die x-Achse eingezeichnet.

Die Maschine 100 verfügt hier über einen Notausschalter 14, ein Netzteil 15, einen Hauptschalter 16, der hier als Kippschalter ausgebildet ist, und einen Griff 13.

Die Maschine 100 verfügt zudem über eine Beobachtungseinheit 24, die hier mit zwei Kameras ausgebildet ist, mit der das gedruckte dreidimensionale Objekt bzw. die Topographie von dessen Oberfläche bzw. die Substratoberfläche vermessen werden kann. Ein unterer Träger 25 ist hier ortsfest ausgebildet, und auf ihm wird das Substrat angeordnet (nicht näher dargestellt).

Die Maschine 100 verfügt zudem über einen Absaugeinsatz 26, mit dem Reste des pulverförmigen, metallischen Materials abgesaugt werden können.

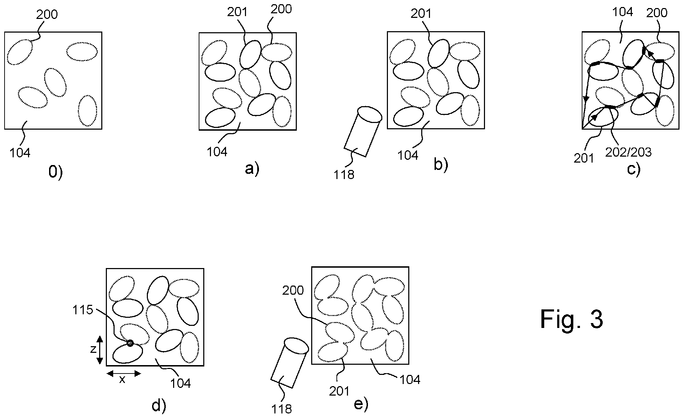

Die **Fig. 3** illustriert schematisch den Ablauf der Fertigung einer neuen Schicht eines dreidimensionalen Objekts in einer beispielhaften Variante des erfindungsgemäßen Verfahrens.

Das Verfahren wird hier in einer Zone, in der eine Verfestigung (bzw. Befestigung) der Körner einer neuen Schicht auf dem Substrat erfolgen soll, dargestellt. In einer Zone, in der keine Verfestigung der Körner erfolgen soll, findet keine Bestrahlung mit dem Elektronenstrahl statt.

Die Fertigung der neuen Schicht beginnt damit, dass das Substrat 104 nach der Fertigung einer letzten, vorhergehenden Schicht zur Verfügung steht, in Fig. 3 eingezeichnet im Teilbild von **Schritt 0).** Auf der Oberfläche des Substrats 104 befinden sich diverse, bereits zuvor befestigte Körner 200 des metallischen Materials, wobei hier zur Vereinfachung nur einige, am weitesten oben liegende Körner 200 eingezeichnet sind. Die bereits zuvor befestigten Körner 200 sind gepunktet dargestellt.

In einem **Schritt a)** wird nun eine neue Schicht von Körnern 201 auf das Substrat 104 aufgebracht. Die losen, noch nicht befestigten Körner 201 der neuen Schicht sind mit durchgehenden Linien gezeichnet. Beim Auftragen der neuen Schicht wird darauf geachtet, dass die Schichtdicke den Durchmesser der Körner 201 möglichst nicht überschreitet, und so eine Überlappung von Körnern 201 der neuen Schicht untereinander vermieden wird, also die neuen Körner 201 im Wesentlichen einzeln liegen.

In einem **Schritt b)** wird nun die Gestalt der Oberfläche des Substrats 104 vermessen, einschließlich der Lage und Gestalt der Körner 201 der neuen Schicht. Dafür werden typischerweise mehrere lichtoptische oder elektronenmikroskopische Bilder mit einer Messvorrichtung 118 angefertigt, und an einen elektronische Auswerte- und Steuereinheit übertragen.

Mittels dieser Bildinformationen wir in einem **Schritt c)** ein Beleuchtungsplan für die neue Schicht von der Auswerte- und Steuereinheit erstellt (berechnet). Der Beleuchtungsplan enthält insbesondere Informationen darüber, wie der Elektronenstrahl über das Substrat 104 wandern soll ("Weg"), und wie lange der dabei an einem jeweiligen Ort bleiben soll (Verweildauer und/oder Vorschubgeschwindigkeit). Zudem können auch eine ortsabhängige Strahlleistung oder auch ein ortsabhängiger Strahldurchmesser des Elektronenstrahls sowie grundsätzlich beliebige weitere orts- oder zeitabhängige Steuerparameter enthalten sein.

Im illustrierten Beispiel ist vorgesehen, dass der Elektronenstrahl Teile 202 des (in Aufsicht, also aus Richtung des Elektronenstrahls kommend bestimmten) Randes der jeweiligen Körner 201 der neuen Schicht aufsucht, wo das jeweilige Korn 201 der neuen Schicht ein Korn 200 der zuvor gefertigten Schicht berührt. In diesen Berührungsbereichen 203 (im Teilbild von Schritt c) als dicke schwarze Linien eingezeichnet) ist hier vorgesehen, dass der Elektronenstrahl nur mit einer geringen Geschwindigkeit VB (Bearbeitungsgeschwindigkeit) fortschreiten soll. Bei einem Wechsel zwischen zwei Berührungsbereichen 203 (im Teilbild von Schritt c) als dünne schwarze Linien, teilweise mit Pfeilen, eingezeichnet) soll der Elektronenstrahl mit einer hohen Geschwindigkeit VT (Transfergeschwindigkeit) fortschreiten. Dabei gilt beispielsweise VT>100^{∗}VB oder sogar VT>1000^{∗}VB, und beispielsweise liegt VB bei 5 nm/s oder weniger, oder sogar bei 1 nm/s oder weniger.

Im anschließenden **Schritt d)** wird dann der Elektronenstrahl 115 aktiviert und entsprechend dem Beleuchtungsplan aus Schritt c) über das Substrat 104 geführt. Elektronenstrahl 115 und Substrat 104 verfahren dabei relativ zueinander in x und y, beispielsweise indem das Substrat 104 unter dem ortsfesten Elektronenstrahl bewegt wird. Im Falle eines mechanischen Verfahrens muss darauf geachtet werden, die Beschleunigungskräfte klein zu halten, um die Lage von noch nicht befestigten Körnern gegenüber der Vermessung von Schritt b) nicht zu verändern. Wird der Elektronenstrahl mittels elektrischen oder magnetischen Feldern gegenüber dem ortsfesten Substrat abgelenkt, so können Beschleunigungskräfte vollständig vermieden werden.

Wenn die Abarbeitung des Beleuchtungsplans beendet ist, wie im Teilbild von **Schritt e)** illustriert, sind die Körner 200, 201 in den vormaligen Berührungsbereichen miteinander verbunden, und dadurch auf dem Substrat 104 befestigt. In der gezeigten Variante wird im Schritt e) mit der Messvorrichtung 118 die Anbindung (Befestigung) der Körner 201 der neuen Schicht auf dem Substrat 104 bzw. an den Körnern 200 der zuvor gefertigten Schicht oder Schichten und ggf. an anderen Körnern 201 der neuen Schicht überprüft. Mittels dieser Überprüfung kann die Erstellung des nächsten Beleuchtungsplans bzw. die Auswahl der zugehörigen Parameter optimiert werden, bevorzugt mit einem genetischen Algorithmus.

Auf dem Substrat 104 kann nun mit der Auftragung einer weiteren, neuen Schicht von Körnern des metallischen Materials in einem weiteren Schritt a) fortgesetzt werden, und so fort, bis das dreidimensionale Objekt vollständig gefertigt ist.

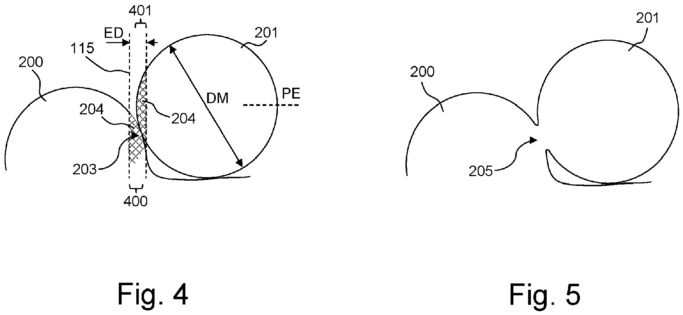

Die **Fig. 4** illustriert in einer schematischen Seitenansicht die Beleuchtung eines Korns 201 einer neuen Schicht des metallischen Materials mit einem Elektronenstrahl 115 im Rahmen des erfindungsgemäßen Verfahrens.

Das Korn 201 der neuen Schicht liegt in einem Berührungsbereich 203 an einem Korn 200 einer zuvor gefertigten Schicht an. Der in Fig. 4 von oben kommende Elektronenstrahl 115 beleuchtet diesen Berührungsbereich 203, wobei der Elektronenstrahl 115 sowohl einen Rand 400 des Korns 200 als auch einen Rand 401 des Korns 201 beleuchtet. Der Rand 401 ist dabei ein in einer Projektionsebene PE (die senkrecht zur Elektronenstrahlrichtung und typischerweise horizontal liegt) äußerer Teil des Korns 201; entsprechendes gilt für den Rand 400 des Korns 200.

Im beleuchteten Teil der Körner 200, 201 kann durch den Elektronenstrahl 115 ein Phasenübergang des metallischen Materials der Körner 200, 201 erzeugt werden, der eine Umverteilung des metallischen Materials erleichtert. In Fig. 4 ist der Bereich 204, in dem der Phasenübergang stattfinden kann, schematisch quadratisch schraffiert eingezeichnet. Insbesondere kann die Bindungsenergie der Atome des metallischen Materials in der durch den Elektronenstrahl 115 erzeugten Phase deutlich reduziert sein, insbesondere wo weit, dass das metallische Material quasi anfängt zu fließen, obwohl das Material deutlich unterhalb seiner Schmelztemperatur ist. Bei vielen Edelmetall- und Edelmetalllegierungs-Materialien, insbesondere Gold, kann durch die Wechselwirkung mit dem Elektronenstrahl trotz niedriger Temperatur (deutlich unterhalb der Schmelztemperatur) die Grenze zu einer superflüssigen Phase erreicht werden.

Der Phasenübergang ist auf die Eindringtiefe der (insbesondere elektrischen bzw. E-Feld erzeugenden) Wechselwirkung des Elektronenstrahls 115 mit dem metallischen Material begrenzt, reicht aber aus, um eine Bindung zwischen den beiden Körnern 200, 201 zu erzeugen.

Infolge dieser Wechselwirkung kann eine Umverteilung des metallischen Materials hin zum Berührungsbereich 203 der Körner 200, 201 stattfinden, so dass die Körner 200, 201 nach der Einwirkung des Elektronenstrahls wie beispielhaft in **Fig. 5** dargestellt am vormaligen Berührungsbereich nun durch eine Festkörperbrücke miteinander verbunden sind, die auch als Hals 205 bezeichnet werden kann. Je größer der kleinste Krümmungsradius am Hals 205, desto besser ist in der Regel die Anbindung (gegenseitige Befestigung) der Körner 200, 201. Das metallische Material ist nach dem Ende der Einwirkung des Elektronenstrahls in seine ursprüngliche (feste, kristalline) Phase zurückgekehrt.

Der Elektronenstrahl 115 hat im gezeigten Beispiel von Fig. 4/Fig. 5 einen Durchmesser ED, der hier ca. 1/8 des (mittleren) Durchmessers DM der Körner 200, 201 beträgt.

### Bezugszeichenliste

- 1: Bodenplatte
- 2: Seitenplatte
- 3: Frontplatte
- 4: Rückplatte
- 5: Deckelplatte
- 6: Bodenstift
- 7: Becherunterteil
- 8: Bechermittelteil
- 9: Becheroberteil
- 10: Führungsstab für die x-Achse
- 11: Halter für die y-Achse
- 12: Halter für die y-Achse
- 13: Griff
- 14: Notausschalter
- 15: Netzteil
- 16: Hauptschalter
- 17: Auslassbasis
- 18: Auslasseinrichtung
- 19: Auslasseinrichtung
- 20: Stift
- 21: Stift
- 22: Schrittmotor für die x-Achse
- 23: Kreuzschlittensystem
- 24: Beobachtungseinheit
- 25: unterer Träger
- 26: Saugeinsatz
- 27: Halter für Elektronenkanone
- 100: Maschine
- 101: Vakuumkammer
- 102: dreidimensionales Objekt
- 103: Substratplatte
- 104: Substrat
- 105: neue Schicht
- 106: Kreuzschlittensystem
- 107: Schrittmotor
- 108: Pulverspeicher
- 109: metallisches Material (Pulver)
- 110: Öffnungsmechanismus
- 111: Verteileinrichtung
- 112: Elektronenkanone
- 113: Glühwendel
- 114: Blende mit Apertur
- 115: Elektronenstrahl
- 116: Einrichtung zum relativen Bewegen des Elektronenstrahls zum Substrat
- 117: Nanomanipulator
- 118: Messvorrichtung
- 119: Kamera
- 120: Steuer- und Auswerteeinrichtung
- 121: Datenleitung
- 122: Substrathalterung
- 123: Heizeinrichtung
- 200: Korn einer zuvor gefertigten Schicht
- 201: Korn einer neuen Schicht
- 202: Teil des Randes
- 203: Berührungsbereich
- 204: Bereich des Phasenübergangs
- 205: Hals
- 400: Rand des Korns einer zuvor gefertigten Schicht
- 401: Rand eines Korns der neuen Schicht
- DM: mittlere Teilchengröße (Durchmesser)
- ED: Durchmesser des Elektronenstrahls
- PE: Projektionsebene
- SD: Schichtdicke
- X: Richtung
- Y: Richtung
- Z: Richtung

## Patentansprüche

1. Verfahren zum schichtweisen Fertigen eines dreidimensionalen Objekts (102),
mit folgenden Schritten:
Schritt a) eine neue Schicht (105) von Körnern (201) eines metallischen Materials (109) wird auf einem Substrat (104) aufgetragen,
wobei die Körner (201) eine mittlere Teilchengröße d50=DM aufweisen und eine mittlere Schichtdicke SD der neu aufgetragenen Schicht (105) maximal 1,5^{∗}DM beträgt,
insbesondere wobei die neue Schicht (105) von Körnern (201) auf eine zuvor gefertigte Schicht von Körnern (200) des Substrats (104) aufgetragen wird;
Schritt b) die Topographie des Substrats (104) wird vermessen, einschließlich der Position und Gestalt der einzelnen Körner (201) der neuen Schicht (105) ;
Schritt c) aus der in Schritt b) gemessenen Topographie und der gewünschten Gestalt des dreidimensionalen Objekts (102) wird ein Beleuchtungsplan für die neue Schicht (105) bestimmt;
Schritt d) gemäß dem Beleuchtungsplan wird zumindest ein Teil der neuen Schicht (105) von Körnern (201) mit einem Elektronenstrahl (115) lokal beleuchtet,
wobei der Elektronenstrahl (115) einen Strahldurchmesser ED auf der Oberfläche des Substrats (104) mit ED≤0,3^{∗}DM aufweist,
wobei mit dem Elektronenstrahl (115) an einem jeweiligen Korn (201) gezielt ein oder mehrere Teile (202) eines Randes (401) des Korns (201) beleuchtet werden, wodurch das Korn (201) auf dem Substrat (104) fixiert wird, insbesondere an Körnern (200) einer zuvor gefertigten Schicht
und/oder an anderen Körnern (201) der neuen Schicht (105),
und wobei das jeweilige beleuchtete Korn (201) bei einer Temperatur unterhalb des Schmelzpunkts des metallischen Materials (109) bleibt;
wobei die vorhergehenden Schritte a) bis d) mehrfach wiederholt werden, bis das dreidimensionale Objekt (102) vollständig ist.

2. Verfahren nach Anspruch 1, **dadurch gekennzeichnet,**
**dass** weiterhin in einem Schritt e) die Topographie des Substrats (104) einschließlich einer erzeugten Anbindung der Körner (201) der neuen Schicht (105) zum übrigen Substrat (104) gemessen wird, wobei auch Schritt e) mehrfach wiederholt wird, bis das dreidimensionale Objekt (102) vollständig ist,
und **dass** jeweils in Schritt c) bei der Erstellung des Beleuchtungsplans der neuen Schicht (105) die gemessenen Topographien der Schritte b) und e) sowie der im Schritt c) angewandte Beleuchtungsplan von einer oder mehreren, zuvor gefertigten Schichten berücksichtigt wird.

3. Verfahren nach Anspruch 2, **dadurch gekennzeichnet, dass** in Schritt c) ein oder mehrere Parameter des Beleuchtungsplans von Schicht zu Schicht gemäß einem genetischen Algorithmus optimiert werden.

4. Verfahren nach einem der vorhergehenden Ansprüche, **dadurch gekennzeichnet, dass** in Schritt d) durch den Elektronenstrahl (115) am jeweiligen Korn (201) im Bereich des beleuchteten Teils (202) des Randes (401) lokal ein Phasenübergang des metallischen Materials (109) bewirkt wird.

5. Verfahren nach Anspruch 4, **dadurch gekennzeichnet, dass** der Phasenübergang des metallischen Materials (109) ein niederdimensionaler Phasenübergang ist, insbesondere ein Phasenübergang gemäß einer "Kosterlitz-Thouless transition".

6. Verfahren nach einem der vorhergehenden Ansprüche, **dadurch gekennzeichnet, dass** das metallische Material (109) ein Edelmetall oder eine Edelmetalllegierung ist.

7. Verfahren nach einem der vorhergehenden Ansprüche, **dadurch gekennzeichnet, dass** das metallische Material (109) Gold oder eine Goldlegierung ist.

8. Verfahren nach einem der vorhergehenden Ansprüche, **dadurch gekennzeichnet, dass** in Schritt b) und/oder in Schritt e) die Messung der Topographie des Substrats (104) das Anfertigen eines oder mehrerer lichtoptischer Bilder des Substrats (104) umfasst.

9. Verfahren nach einem der vorhergehenden Ansprüche, **dadurch gekennzeichnet, dass** in Schritt b) und/oder in Schritt e) die Messung der Topographie des Substrats (104) das Anfertigen eines oder mehrerer Rasterelektronenmikroskop-Bilder des Substrats (104) umfasst.

10. Verfahren nach einem der vorhergehenden Ansprüche, **dadurch gekennzeichnet, dass** die Körner (201) des metallischen Materials (109) eine Teilchengrößenverteilung aufweisen
mit d10 ≥ 0,75^{∗}DM, bevorzugt d10 ≥ 0,90^{∗}DM,
und mit d90 ≤ 1,25^{∗}DM, bevorzugt d90 ≤ 1,10^{∗}DM.

11. Verfahren nach einem der vorhergehenden Ansprüche, **dadurch gekennzeichnet,**
**dass** 100 nm ≤ DM, bevorzugt 500 nm ≤ DM, besonders bevorzugt 1 µm ≤ DM, ganz besonders bevorzugt 1,5 µm ≤ DM,
und/oder dass DM ≤ 50 µm, bevorzugt DM ≤ 25 µm, besonders bevorzugt DM ≤ 10 µm, ganz besonders bevorzugt DM ≤ 5 µm.

12. Verfahren nach einem der vorhergehenden Ansprüche, **dadurch gekennzeichnet, dass** das Substrat (104) beheizt wird,
insbesondere wobei für eine Substrattemperatur Tsub in Kelvin und eine Schmelztemperatur Tmelt in Kelvin des metallischen Materials (109) der Körner (201) gilt: 0,50^{∗}Tmelt ≤ Tsub ≤ 0,90^{∗}Tmelt,
bevorzugt 0,55^{∗}Tmelt ≤ Tsub ≤ 0,75^{∗}Tmelt,
besonders bevorzugt 500°C ≤ Tsub ≤ 650°C.

13. Verfahren nach einem der vorhergehenden Ansprüche, **dadurch gekennzeichnet, dass** in Schritt d) der Elektronenstrahl (115), der den Teil (202) oder die mehreren Teile (202) des Randes (401) des jeweiligen Korns (201) beleuchtet, Berührungsbereiche (203) des jeweiligen Korns (201) zu Körnern (200) einer zuvor gefertigten Schicht und/oder anderen Körnern (201) der neuen Schicht (105) beleuchtet, wobei die Berührungsbereiche (203) zuvor in der in Schritt b) gemessenen Topographie gefunden wurden.

14. Maschine (100) zur schichtweisen Fertigung eines dreidimensionalen Objekts (102) gemäß einem der vorhergehenden Verfahren, umfassend
- eine Vakuumkammer (101);
- eine Substrathalterung (122) für das Substrat (104);
- einen Pulverspeicher (108) für die Körner (200, 201) des metallischen Materials (109);
- eine Verteileinrichtung (111) zum Auftragen jeweils einer Schicht von Körnern (200, 201) des metallischen Materials (109) auf das Substrat (104), insbesondere umfassend einen Schieber;
- eine Messvorrichtung (118) zur Messung der Topographie des Substrats (104), insbesondere umfassend eine optische Kamera (119);
- eine elektronische Steuer- und Auswerteeinrichtung (120) zur Bestimmung und Ansteuerung des Beleuchtungsplans;
- einen Nanomanipulator (117), umfassend wenigstens eine Elektronenkanone (112) zur Erzeugung des Elektronenstrahls (115) sowie eine Einrichtung (116) zum relativen Bewegen des Elektronenstrahls (115) zum Substrat (104).

15. Maschine (100) nach Anspruch 14, **dadurch gekennzeichnet, dass** die Einrichtung (116) zum relativen Bewegen des Elektronenstrahls (115) zum Substrat (104) einen oder mehrere Schrittmotoren (22; 107) umfasst, mit denen die Substrathalterung (122) und/oder die Elektronenkanone (112) relativ zur übrigen Maschine (100) bewegt werden kann.
